(19) Europäisches Patentamt
European Patent Office
Office européen des brevets

(11) Publication number: **0 184 872 B1**

(12) **EUROPEAN PATENT SPECIFICATION**

(45) Date of publication of patent specification: **04.01.89**

(51) Int. Cl.[4]: **C 07 F 9/50**

(21) Application number: **85201885.2**

(22) Date of filing: **15.11.85**

(54) **Novel tertiary phosphines.**

(30) Priority: **13.12.84 GB 8431551**

(43) Date of publication of application:
**18.06.86 Bulletin 86/25**

(45) Publication of the grant of the patent:
**04.01.89 Bulletin 89/01**

(84) Designated Contracting States:
**BE CH DE FR GB IT LI NL SE**

(56) References cited:
**CHEMISCHE BERICHTE, vol. 107, no. 1, 1974, pages 117-122; D. FENSKE et al.: "2,3-Bis(diphenylphosphino)maleinsäureanhydrid und Diphenylphosphinoderivate des Cyclobutendions als Liganden in Metallcarbonylen"**

**SOVIET INVENTIONS ILLUSTRATED, Section Ch: chemical, Week, C26, 6th August 1980, no. 46147C/26, Derwent Publications Ltd., London, GB; & SU - A - 697 520 (MOSCOW LOMONOSOV UNIV.) 15-11-1979**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **van Doorn, Johannes Adrianus**
**Badhuisweg 3**
**NL-1031 CM Amsterdam (NL)**
Inventor: **Wife, Richard Lewin**
**Badhuisweg 3**
**NL-1031 CM Amsterdam (NL)**
Inventor: **Meijboom, Nicolaas**
**Badhuisweg 3**
**NL-1031 CM Amsterdam (NL)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

The present invention relates to novel tertiary phosphines, to a process for their preparation and their use as intermediate or ligand.

The novel tertiary phosphines according to the present invention are compounds qf the general formula

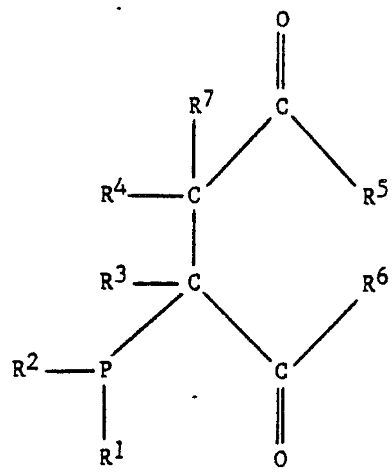

(I)

wherein $R^1$ and $R^2$ each, independently or taken together, represent an optionally substituted hydrocarbon group; $R^3$ and $R^4$ each independently represent a hydrogen atom, an optionally substituted hydrocarbon group, a group

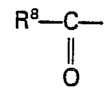

or a group

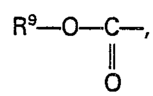

wherein $R^8$ and $R^9$ each independently represent an optionally substituted hydrocarbon group and $R^4$ additionally represents a group

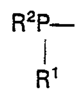

$R^5$ and $R^6$ each independently represent a hydroxyl group, an optionally substituted hydrocarbon group, a group $R^{10}$—O—, a group

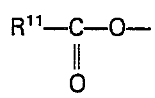

or a group

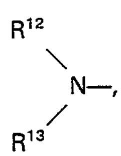

wherein $R^{10}$, $R^{11}$, $R^{12}$ and $R^{13}$ each independently represent an optionally substituted hydrocarbon group, or $R^5$ and $R^6$ taken together represent an oxygen atom or a group >N—$R^{14}$ wherein $R^{14}$ represents an optionally substituted hydrocarbon group; and $R^7$ represents a hydrogen atom.

The hydrocarbon groups may be alkyl-, aryl-, alkaryl-, aralkyl groups hving up to 20 carbon atoms.

Preferred compounds according to the invention are those of the general formula I wherein $R^1$ and $R^2$ each represent an optionally substituted alkyl group having 1—8 carbon atoms or an optionally substituted phenyl group or $R^1$ and $R^2$ taken together represent a bridging alkylene group having 4—12 carbon atoms; $R^3$ and $R^4$ each represent a hydrogen atom, an optionally substituted alkyl group having 1—8 carbon atoms or a group

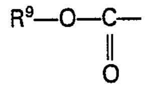

wherein $R^9$ represents an alkyl group having 1—6 carbon atoms and $R^4$ additionally represents a group

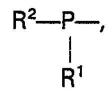

and $R^5$ and $R^6$ represent a hydroxyl group, an optionally substituted alkyl group having 1—8 carbon atoms, an optionally substituted phenyl group or a group $R^{10}$—O— wherein $R^{10}$ represents an alkyl group having 1—6 carbon atoms or $R^5$ and $R^6$ taken together represent an oxygen atom or a group >N—$R^{14}$ wherein $R^{14}$ represents an alkyl group having 1—6 carbon atoms.

Most preferred compounds according to the present invention are those of the general formula I wherein $R^1$ and $R^2$ each represent an optionally substituted alkyl group having 1—8 carbon atoms or an optionally substituted phenyl group; $R^3$ and $R^4$ each represent a hydrogen atom and $R^5$ and $R^6$ taken together represent an oxygen atom.

The present invention further relates to a process for the preparation of the compounds of the general formula I in which a secondary phosphine of the general formula

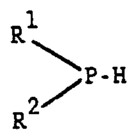

(II)

is reacted with a compound of the general formula

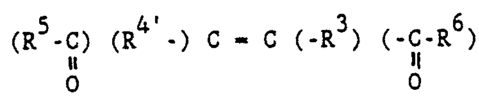

(III)

wherein $R^1$ to $R^6$ have the respective meanings as defined hereinbefore and $R^{4'}$, in addition represents $R^4$, Br, Cl, a group

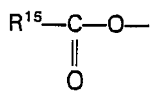

or a group $R^{16}$—$SO_3$— wherein $R^{15}$ and $R^{16}$ each independently represent an optionally substituted hydrocarbon group.

The secondary phosphines to be used in the process according to the invention are preferably phosphines of the general formula II wherein $R^1$ and $R^2$ represent an optionally substituted alkyl group having 1—8 carbon atoms or an optionally substituted phenyl group or $R^1$ and $R^2$ taken together represent a bridging alkylene group having 4—12 carbon atoms. Typical examples of secondary phosphines are diphenylphosphine, di(2-methoxyphenyl)phosphine, di(4-trifluoromethylphenyl)phosphine, di(2-methylphenyl)phosphine, di(3-methylphenyl)phosphine, phenylbenzylphosphine, di(2-cyanoethyl)phosphine, phospholane or 9-phosphabicyclo[3.3.1]nonane. The use of optionally substituted diphenylphosphines is most preferred.

When compounds of the general formula III, wherein $R^{4'}$ represents a hydrogen atom, an optionally substituted hydrocarbon group, a group

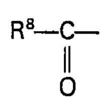

or a group

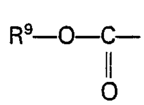

as defined hereinbefore are used the process of the invention yields mono tertiary phosphines of the general formula I. Using compounds of the general formula III wherein $R^{4'}$ represents Br, Cl, a group

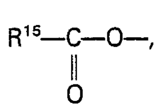

a group $R^{16}$—$SO_3$ as defined hereinbefore, bis tertiary phosphine compounds of the general formula I wherein $R^4$ represents the group

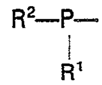

are obtained.

In particular compounds of the general formula III are used wherein $R^3$ and $R^{4'}$ each independently represent a hydrogen atom, an optionally substituted alkyl group having 1—8 carbon atoms or a group

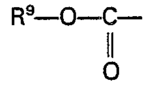

wherein $R^9$ represents an alkyl group having 1—6 carbon atoms or $R^{4'}$ in addition represents Br, Cl, a group

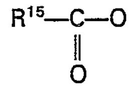

or a group $R^{16}$—$SO_3$— wherein $R^{15}$ and $R^{16}$ each independently represent an optionally substituted alkyl group or phenyl group and $R^5$ and $R^6$ each independently represent a hydroxyl group, an optionally substituted alkyl group having 1—8 carbon atoms or an optionally substituted phenyl group or a group $R^{10}$—O— wherein $R^{10}$ represents an alkyl group having 1—6 carbon atoms or $R^5$ and $R^6$ taken together represent an oxygen atom of a group >N—$R^{14}$ wherein $R^{14}$ represents an alkyl group having 1—6 carbon atoms.

Preferably, compounds of the general formula III are used wherein $R^3$ represents a hydrogen atom, $R^{4'}$ represents a hydrogen atom, Br, Cl or a group

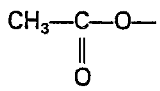

and $R^5$ and $R^6$ taken together represent an oxygen atom.

The process of the invention is generally carried out using a non-oxidizing solvent. Suitable solvents may be for example halogen substituted hydrocarbons such as methylene chloride, chloroform, bromobenzene or perfluoroalkanes, hydrocarbons such as benzene, toluene, hexane or octane, ethers such as tetrahydrofuran, diethylether, dimethylether or diethylene glycol (diglyme), or 1,4-dioxane, amides such as N,N'-dimethylformamide, N,N'-dimethylacetamide or N-methylpyrrolidone, pyridine, nitriles such as acetonitrile or butyronitrile, esters such as methylacetate or ethylacetate or ketones such as acetone, methylethylketone or methyl-isobutylketone.

The use of ethers in particular tetrahydrofuran or halogen substituted hydrocarbons in particular chloroform or methylenechloride as solvent is preferred.

The reaction temperature in the process of the invention may vary from ambient temperature to temperatures up to 150°C.

The compounds of the general formula I may be used as ligands or as intermediate for the preparation of ligands for transition metal catalyzed reactions. It is to be noted that the compounds of the general formula I will comprise chiral carbon atoms.

Compounds of the general formula I used as intermediates in the preparation of ligands are especially those compounds of the general formula I wherein $R^5$ and $R^6$ taken together represent oxygen. These compounds comprise mono-phosphines or bis-phosphines in which the phosphine groups are bound to the succinic acid anhydride skeleton, which is very suitable for further reactions with a nucleophile reagent, such as water, an alcohol or an amine. For example 2-phosphinopropionic acid, which can be used as ligands in Ni-catalyzed polymerization of ethylene (cf.: UK 1,305,122), can be prepared from 2-phosphino-butanedioic acid anhydride by reacting the anhydride with water and decarboxylating the 2-phosphinobutanedioic acid. The carboxylic acid group having a phosphino group in the alpha position appears to decarboxylate very smoothly giving the phosphinopropionic acid in high yield. 1,2-Bisphosphinoethane ligands may be prepared by hydrolysis of 2,3-bisphosphinobutanedioic acid anhydride followed by decarboxylation.

In the following examples the identities of the novel compounds has been proven by means of $^{31}p$, $^1H$ and $^{13}C$ NMR analysis and elemental analysis.

Example 1

Preparation of 2-diphenylphosphinobutanedioic acid from maleic anhydride.

A solution of 9.8 g (100 mmol) maleic anhydride in 150 ml tetrahydrofuran is added in ca. 1 hour to a stirred solution of 26.1 ml (150 mmol) diphenylphosphine in 50 ml tetrahydrofuran. The orange solution is left overnight and subsequently 50 ml water is added, the solution is stirred for 1 hour and the tetrahydrofuran is removed in vacuum. To the residue is added a solution of 12 g NaOH in 250 ml water. The resulting mixture is extracted with 200 ml ethylacetate. The aqueous layer is filtered and acidified with 30 ml concentrated hydrochloric acid. The resulting mixture was left overnight, upon standing pink crystals were formed in the oil phase of the mixture. The crystals were collected by filtration, washed with water and dried in vacuum. Yield 21.3 g 2-diphenylphosphinobutanedioic acid (70% of theory).

2-Diphenylphospinopropionic acid can be prepared from 2-diphenylphosphinobutanedioic acid according to the following:

A mixture of 20.7 g (68.5 mmol) diphenylphosphinosuccinic acid and 10 ml of toluene is heated at 130°C for three hours. The initial solid mass gradually changes to an oil. The mixture is allowed to cool and 100 ml of a 5% NaOH solution is added to dissolve the product. The aqueous layer is extracted with ethyl acetate and subsequently acidified with 10 ml of concentrated hydrochloric acid. An oil is obtained that crystallises on standing overnight. The crystals are collected by filtration, thoroughly washed with water and then dried in vacuum. Yield 15.8 g (61.2 mmol) diphenylphosphinopropionic acid (89.3% of theory).

Example 2

Preparation of 2-diphenylphosphinobutanedioic acid anhydride.

A solution of 9.8 g (100 mmol) maleic anhydride in 150 ml tetrahydrofuran is added in ca. 1 hour to a stirred solution of 17.4 ml (100 mmol) diphenylphosphine in 50 ml tetrahydrofuran. The orange solution is left overnight and subsequently the solvent is evaporated leaving diphenylphosphinosuccinic anhydride according to NMR analysis.

Example 3

Preparation of 1,2-dibenzoyl-1-diphenylphosphinoethane from trans-1,2-dibenzoylethene.

To a solution of 2.3 g (9.6 mmol) trans-1,2-dibenzoylethene in 25 ml tetrahydrofuran is added 1.7 ml (10 mmol) diphenylphosphine and the mixture is left overnight. After removing the tetrahydrofuran in vacuum, ether is added to induce crystallization. The crystals are collected by filtration, washed with cyclohexane and dried in vacuum. Yield 3.7 g (90% of theory).

Example 4

Preparation of 2-diphenylphosphinobutanedioic acid from dimethylmaleate.

A mixture of 16 g (111 mmol) dimethylmaleate 15 ml (86 mmol) diphenylphosphine and 50 ml chlorobenzene is heated at 130°C for ca. 70 hours. Subsequently, the solvent is removed in vacuum and the residue is mixed with 150 ml ethanol, 100 ml water and 17 g sodium hydroxide. The resulting mixture is refluxed for 3 hours. Then ethanol is removed by evaporation and the resulting residue is extracted with ethylacetate. On acidifying the aqueous layer 21.1 g 2-diphenylphosphinobutanedioic acid is obtained in the form of white crystals (81% of theory).

Example 5

Preparation of 2,3-bis-(diphenylphosphino)butanedioic acid anhydride from bromomaleicanhydride.

To a solution of 7 g (40 mmol) bromomaleicanhydride in 100 ml dichloromethane is added at a temperature of 0°C, 14.7 g (79 mmol) diphenylphosphine. The mixture is stirred for 4 hours at room temperature. White crystals separated which are isolated by filtration and washed with 2 × 25 ml dichloroethane. After drying overnight in high-vacuum 12.0 g (19 mmol) 2,3-bis(diphenylphosphino)butanedioic acid anhydride in the form of the bis-HBr salt is obtained (48% of theory).

Example 6

Preparation of 2,3-bis-(diphenylphosphino)butanedioic acid anhydride from bromomaleicanhydride.

To a solution of 7.5 g (42 mmol) bromomaleicanhydride in 100 ml diethylether is added at a temperature of 0°C, 15.8 g (84 mmol) diphenylphosphine. The mixture is stirred for one hour at room temperature and the yellow brown solid is isolated and washed with 3 × 20 ml diethylether. After drying in high-vacuum for 12 hours 16.3 g (30 mmol) 2,3-bis-(diphenylphosphino)butanedioic acid anhydride in the form of the mono-HBr salt is obtained (71% of theory).

Example 7

Preparation of 2,3-bis-(diphenylphosphino)butanedioic acid monomethylester from bromomaleicanhydride.

To a solution of 17.7 g (100 mmol) in 150 ml tetrahydrofuran is added at a temperature of 0°C, 37.2 g (200 mmol) diphenylphosphine. The red solution is stirred for 3 hours at room temperature and subsequently quenched in a solution of 5.8 g sodium in 200 ml methanol at a temperature of −80°C. Then

the mixture is stirred until room temperature is reached and left at that temperature for half an hour without stirring. Tetrahydrofuran and methanol are removed in vacuum and the remaining yellow solid is suspended in 200 ml water. The suspension is acidified to pH2 and extracted with 100 ml dichloromethane. The organic layer thus produced is washed with water to pH 5—6 and dried on magnesium sulfate. Filtration and evaporation of the dichloromethane gives a yellow oil which crystallizes by trituration with ether to yield 20.6 g (42 mmol) 2,3-bis-(diphenylphosphino)butanedioic acid monomethylester (42% of theory).

**Claims**

Tertiary phosphines of the general formula

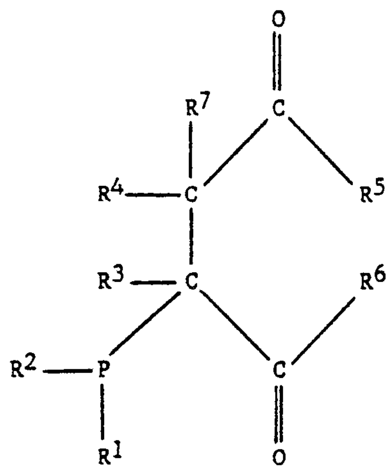

(I)

wherein $R^1$ and $R^2$ each, independently or taken together, represent an optionally substituted hydrocarbon group; $R^3$ and $R^4$ each independently represent a hydrogen atom, an optionally substituted hydrocarbon group, a group

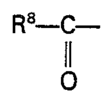

or a group

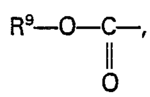

wherein $R^8$ and $R^9$ each independently represent an optionally substituted hydrocarbon group, and $R^4$ additionally represents a group

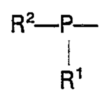

$R^5$ and $R^6$ each independently represent a hydroxyl group, an optionally substituted hydrocarbon group, a group $R^{10}$—O—, a group

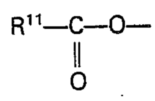

or a group

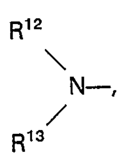

wherein $R^{10}$, $R^{11}$, $R^{12}$ and $R^{13}$ each independently represent an optionally substituted hydrocarbon group, or $R^5$ and $R^6$ taken together represent an oxygen atom or a group >N—$R^{14}$ wherein $R^{14}$ represents an optionally substituted hydrocarbon group; and $R^7$ represents a hydrogen atom.

2. Tertiary phosphines according to claim 1, wherein the hydrocarbon groups are alkyl-, aryl-, alkaryl- or aralkyl groups having up to 20 carbons atoms.

3. Tertiary phosphines according to claim 2, wherein $R^1$ and $R^2$ each represent an optionally substituted alkyl group having 1—8 carbon atoms or an optionally substituted phenyl group, or $R^1$ and $R^2$ taken together represent a bridging alkylene group having 4—12 carbon atoms; $R^3$ and $R^4$ each represent a hydrogen atom, an optionally substituted alkyl group having 1—8 carbon atoms or a group

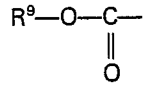

wherein $R^9$ represents an alkyl group having 1—6 carbon atoms and $R^4$ additionally represents a group

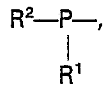

and $R^5$ and $R^6$ represent a hydroxyl group, an optionally substituted alkyl group having 1—8 carbon atoms, an optionally substituted phenyl group or a group $R^{10}$—O— wherein $R^{10}$ represents an alkyl group having 1—6 carbon atoms, or $R^5$ and $R^6$ taken together represent an oxygen atom or a group >N—$R^{14}$ wherein $R^{14}$ represents an alkyl group having 1—6 carbon atoms.

4. Tertiary phosphines according to claim 3, wherein $R^1$ and $R^2$ each represent an optionally substituted alkyl group having 1—8 carbon atoms or an optionally substituted phenyl group, $R^3$ and $R^4$ each represent a hydrogen atom, and $R^5$ and $R^6$ taken together represent an oxygen atom.

5. A process for the preparation of tertiary phosphines as claimed in any one of the preceding claims, characterized in that a secondary phosphine of the general formula

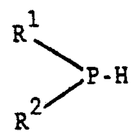
(II)

is reacted with a compound of the general formula

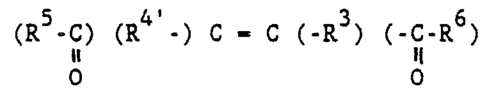
(III)

wherein $R^1$ to $R^6$ have the respective meaning as defined hereinbefore and $R^{4'}$ represents $R^4$, Br, Cl, a group

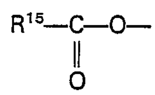

or a group $R^{16}$—$SO_3$— wherein $R^{15}$ and $R^{16}$ each independently represent an optionally substituted hydrocarbon group.

6. A process as claimed in claim 5, characterized in that $R^1$ and $R^2$ each represent an optionally substituted alkyl group having 1—8 carbon atoms or an optionally substituted phenyl group, or $R^1$ and $R^2$ taken together represent a bridging alkylene group having 4—12 carbon atoms.

7. A process as claimed in claim 5 or 6, characterized in that the secondary phosphine is an optionally substituted diphenylphosphine.

8. A process as claimed in any one of claims 5 to 7, characterized in that $R^3$ represents a hydrogen atom, $R^{4'}$ represents a hydrogen atom, Br, Cl, a group

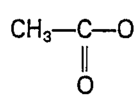

and $R^5$ and $R^6$ taken together represent an oxygen atom.

9. A process as claimed in any one of claims 5 to 8, characterized in that it is carried out using an ether or halogenated hydrocarbon as solvent.

10. A compound according to the general formula I, whenever prepared according to the process as claimed in any one of claims 5 to 9.

11. A compound according to claim 1, whenever used as ligand.

12. A compound according to claim 1, whenever used as intermediate in the preparation of ligands.

13. A compound according to claim 1, wherein $R^5$ and $R^6$ taken together represent an oxygen atom,

whenever used as intermediate in the preparation of ligand by reacting with a nucleophile reagent.

**Patentansprüche**

1. Tertiäre Phosphine der allgemeinen Formel

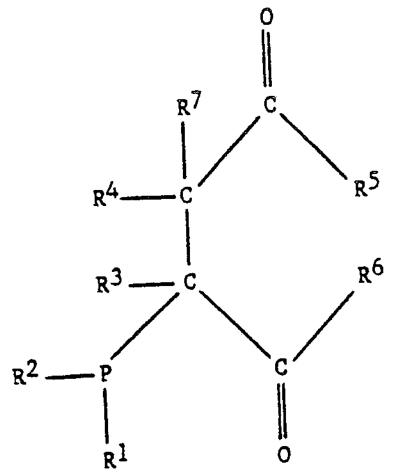

(I)

in der $R^1$ und $R^2$ jeweils unabhängig oder zusammen eine gegebenenfalls substituierte Kohlenwasserstoffgruppe bedeuten; $R^3$ und $R^4$ jeweils unabhängig voneinander ein Wasserstoffatom, eine gegebenenfalls substituierte Kohlenwasserstoffgruppe, eine Gruppe

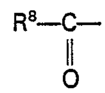

oder eine Gruppe

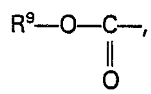

bedeuten, wobie $R^8$ und $R^9$ jeweils unabhängig voneinander eine gegebenenfalls substituierte Kohlenwasserstoffgruppe sind, und $R^4$ eine Gruppe der Formel

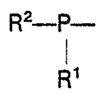

bedeutet; $R^5$ und $R^6$ jeweils unabhängig voneinander eine Hydroxylgruppe, eine gegebenenfalls substituierte Kohlenwasserstoffgruppe, eine Gruppe $R^{10}$—O—, eine Gruppe

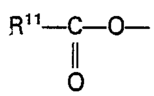

oder eine Gruppe

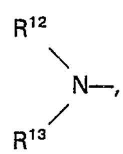

bedeuten, wobie $R^{10}$, $R^{11}$, $R^{12}$ und $R^{13}$ jeweils unabhängig voneinander eine gegegbenenfalls substituierte Kohlenwasserstoffgruppe, oder $R^5$ und $R^6$ zusammen ein Sauerstoffatom oder eine Gruppe >N—$R^{14}$, in der $R^{14}$ eine gegebenenfalls substituierte Kohlenwasserstoffgruppe ist, bedeuten; und $R^7$ ein Wasserstoffatom darstellt.

2. Tertiäre Phosphine nach Anspruch 1, wobei die Kohlenwasserstoffgruppen Alkyl-, Aryl-, Alkaryl- oder Aralkylgruppen mit bis zu 20 Kohlenstoffatomen sind.

3. Tertiäre Phosphine nach Anspruch 2, wobei $R^1$ und $R^2$ jeweils unabhängig voneinander eine gegebenenfalls substituierte Alkylgruppe mit 1 bis 8 Kohlenstoffatomen oder eine gegebenenfalls

substituierte Phenylgruppe, oder $R^1$ und $R^2$ zusammen eine Brückenalkylengruppe mit 4 bis 12 Kohlenstoffatomen bedeuten; $R^3$ und $R^4$ jeweils ein Wasserstoffatom, eine gegebenenfalls substituierte Alkylgruppe mit 1 bis 8 Kohlenstoffatomen oder eine Gruppe

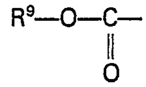

bedeuten, wobei $R^9$ eine Alkylgruppe mit 1 bis 6 Kohlenstoffatomen ist und $R^4$ zusätzlich eine Gruppe

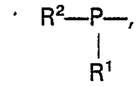

bedeutet, und $R^5$ und $R^6$ eine Hydroxylgruppe, eine gegebenenfalls substituierte Alkylgruppe mit 1 bis 8 Kohlenstoffatomen, eine gegebenenfalls substituierte Phenylgruppe oder eine Gruppe $R^{10}$—O— bedeuten, wobei $R^{10}$ eine Alkylgruppe mit 1 bis 6 Kohlenstoffatomen ist, oder $R^5$ und $R^6$ zusammen ein Sauerstoffatom oder eine Gruppe >N—$R^{14}$ bedeuten, wobei $R^{14}$ eine Alkylgruppe mit 1 bis 6 Kohlenstoffatomen ist.

4. Tertiäre Phosphine nach Anspruch 3, wobei $R^1$ und $R^2$ jeweils eine gegebenenfalls substituierte Alkylgruppe mit 1 bis 8 Kohlenstoffatomen oder eine gegebenenfalls substituierte Phenylgruppe bedeuten; $R^3$ und $R^4$ jeweils ein Wasserstoffatom sind, und $R^5$ und $R^6$ zusammen ein Sauerstoffatom darstellen.

5. Verfahren zur Herstellung von tertiären Phosphinen nach einem der vorangehenden Ansprüche, dadurch gekennzeichnet, daß ein sekundäres Phosphin der allgemeinen Formel

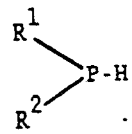

(II)

umgesetzt wird mit einer Verbindung der allgemeinen Formel

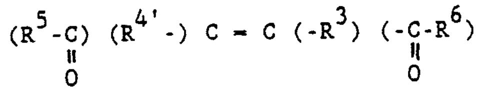

(III)

wobei $R^1$ bis $R^6$ die jeweils oben angegebene Bedeutung haben und $R^{4'}$ $R^4$, Br, Cl, eine Gruppe

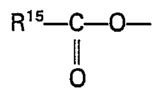

oder eine Gruppe $R^{16}$—$SO_3$— ist, wobei $R^{15}$ und $R^{16}$ jeweils unabhängig voneinander eine gegebenenfalls substituierte Kohlenwasserstoffgruppe darstellen.

6. Verfahren nach Anspruch 5, dadurch gekennzeichnet, daß $R^1$ und $R^2$ jeweils eine gegebenenfalls substituierte Alkylgruppe mit 1 bis 8 Kohlenstoffatomen oder eine gegebenenfalls substituierte Phenylgruppe bedeuten, oder $R^1$ und $R^2$ zusammen eine Brückenalkylengruppe mit 4 bis 12 Kohlenstoffatomen darstellen.

7. Verfahren nach Anspruch 5 oder 6, dadurch gekennzeichnet, daß das sekundäre Phosphin ein gegebenenfalls substituiertes Diphenylphosphin ist.

8. Verfahren nach einem der Ansprüche 5 bis 7, dadurch gekennzeichnet, daß $R^3$ ein Wasserstoffatom bedeutet, $R^{4'}$ ein Wasserstoffatom, Br, Cl, eine Gruppe

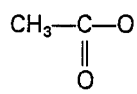

bedeutet und $R^5$ und $R^6$ zusammen ein Sauerstoffatom sind.

9. Verfahren nach einem der Ansprüche 5 bis 8, dadurch gekennzeichnet, daß es unter Verwendung eines Ethers oder halogenierten Kohlenwasserstoffs als Lösungsmittel durchgeführt wird.

10. Verbindung der allgemeinen Formel I, soweit sie nach dem Verfahren nach einem der Ansprüche 5 bis 9 hergestellt worden ist.

11. Verbindung nach Anspruch 1, soweit sie als Ligand verwendet wird.

12. Verbindung nach Anspruch 1, soweit sie als Zwischenprodukt zur Herstellung von Liganden verwendet wird.

13. Verbindung nach Anspruch 1, wobei $R^5$ und $R^6$ zusammen ein Sauerstoffatom bedeuten, soweit sie als Zwischenprodukt zur Herstellung von Liganden durch Umsetzung mit einem nucleophilen Reagenz verwendet wird.

**Revendications**

1. Phosphines tertiaires de formule générale

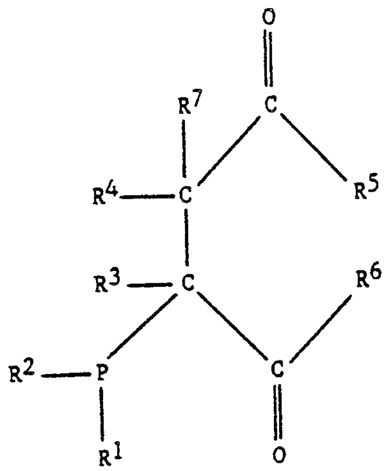

(I)

dans laquelle $R^1$ et $R^2$ représentent chacun, pris indépendamment ou conjointement, un groupe hydrocarbure éventuellement substitué; $R^3$ et $R^4$ représentent chacun indépendamment un atome d'hydrogène, un groupe hydrocarbure éventuellement substitué, un groupe

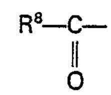

ou un groupe

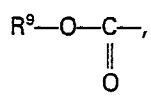

dans lesquels $R^8$ et $R^9$ représentent chacun indépendamment un groupe hydrocarbure éventuellement substitué, et $R^4$ représente en outre un groupe

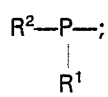

$R^5$ et $R^6$ représentent chacun indépendamment un groupe hydroxyle, un groupe hydrocarbure éventuellement substitué, un groupe $R^{10}$—O—, un groupe

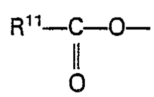

ou un groupe

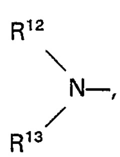

dans lesquels $R^{10}$, $R^{11}$, $R^{12}$ et $R^{13}$ représentent chacun indépendamment un groupe hydrocarbure éventuellement substitué, ou $R^5$ et $R^6$ pris conjointement représentent un atome d'oxygène ou un groupe

>N—$R^{14}$ dans lequel $R^{14}$ représente un groupe hydrocarbure éventuellement substitué; et $R^7$ représente un atome d'hydrogène.

2. Phosphines tertiaires selon la revendication 1, dans lesquelles les groupes hydrocarbures sont des groupes alkyle, aryle, alkaryle ou aralkyle possèdant jusqu'à 20 atomes de carbone.

3. Phosphines tertiaires selon la revendication 2, dans lesquelles $R^1$ et $R^2$ représentent chacun un groupe alkyle éventuellement substitué possèdant de 1 à 8 atomes de carbone ou un groupe phènyle éventuellement substitué, ou $R^1$ et $R^2$, pris conjointement, représentent un groupe alkylène créant un pont, possèdant de 4 à 12 atomes de carbone; $R^3$ et $R^4$ représentent chacun un atome d'hydrogène, un groupe alkyle éventuellement substitué possèdant de 1 à 8 atomes de carbone ou un groupe

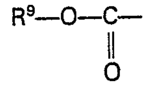

dans lequel $R^9$ représente un groupe alkyle possèdant de 1 à 6 atomes de carbone et $R^4$ représente en plus un groupe

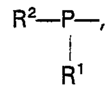

et $R^5$ et $R^6$ représentent un groupe hydroxyle, un groupe alkyle éventuellement substitué possèdant de 1 à 8 atomes de carbone, un groupe phényle éventuellement substitué ou un groupe $R^{10}$—O— dans lequel $R^{10}$ représente un groupe alkyle possèdant de 1 à 6 atomes de carbone, ou $R^5$ et $R^6$, pris conjointement, représentent un atome d'oxygène ou un groupe >N—$R^{14}$ dans lequel $R^{14}$ représente un groupe alkyle possèdant de 1 à 6 atomes de carbone.

4. Phosphines tertiaires selon la revendication 3, dans lesquelles $R^1$ et $R^2$ représentent chacun un groupe alkyle éventuellement substitué possèdant de 1 à 8 atomes de carbone ou un groupe phényle éventuellement substitué; $R^3$ et $R^4$ représentent chacun un atome d'hydrogène, et $R^5$ et $R^6$, pris conjointement, représentent un atome d'oxygène.

5. Procédé pour la préparation de phosphines tertiaires selon l'une quelconque des revendications précédentes, caractérise en ce que l'on fait réagir une phosphine secondaire de formule générale

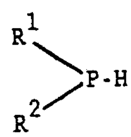
(II)

avec un composé de formule générale

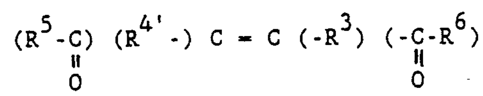
(III)

dans lesquelles $R^1$ à $R^6$ ont les significations respectives données précédemment et $R^{4'}$ représente $R^4$, Br, Cl, un groupe

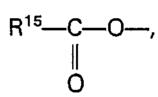

ou un groupe $R^{16}$—$SO_3$— dans lesquels $R^{15}$ et $R^{16}$ représentent chacun indépendamment un groupe hydrocarbure éventuellement substitué.

6. Procédé selon la revendication 5, caractérisé en ce que $R^1$ et $R^2$ représentent chacun un groupe alkyle éventuellement substitué possèdant de 1 à 8 atomes de carbone ou un groupe phényle éventuellement substitué, ou $R^1$ et $R^2$, prix conjointement, représentent un groupe alkylène créant un pont, possèdant de 4 à 12 atomes de carbone.

7. Procédé selon la revendication 5 ou 6, caractérisé en ce que la phosphine secondaire est une diphénylphosphine éventuellement substituée.

8. Procédé selon l'une quelconque des revendications 5 à 7, caractérisé en ce que $R^3$ représente un atome d'hydrogéne, $R^{4'}$ représente un atome d'hydrogène, Br, Cl, un groupe

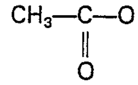

et $R^5$ et $R^6$, pris conjointement, représentent un atome d'oxygène.

9. Procédé selon l'une quelconque des revendications 5 à 8, caractérisé en ce qu'on l'effectue en utilisant un ether ou un hydrocarbure halogéné à titre de solvant.

10. Composé conforme à la formule générale I, chaque fois qu'il est préparé conformément au procédé selon l'une quelconque des revendications 5 à 9.

11. Composé selon la revendication 1, chaque fois qu'il est utilisé à titre de ligand.

12. Composé selon la revendication 1, chaque fois qu'il est utilisé à titre d'intermédiaire dans la préparation de ligands.

13. Composé selon la revendication 1, dans lequel $R^5$ et $R^6$ pris conjointement, représentent un atome d'oxygène, chaque fois qu'il est utilisé à titre d'intermédiaire dans la préparation de ligand par réaction avec un réactif nucléophile.